# EUROPÄISCHE PATENTSCHRIFT

(11) **EP 3 634 671 B1**
(45) Veröffentlichungstag und Bekanntmachung des Hinweises auf die Patenterteilung: **03.01.2024**
(21) Anmeldenummer: 18729664.5
(22) Anmeldetag: 06.06.2018
(51) Int. Cl.: B23C 5/28, B23C 5/00, B23Q 11/10

(54) **FRÄSWERKZEUG MIT WECHSELBAREM SCHNEIDRING**
MILLING TOOL HAVING A REPLACEABLE CUTTING RING
OUTIL DE FRAISAGE À BAGUE DE COUPE INTERCHANGEABLE

(30) Priorität: 06.06.2017 DE 102017112374
(43) Veröffentlichungstag der Anmeldung: 15.04.2020
(73) Patentinhaber: KOMET Deutschland GmbH, 74354 Besigheim (DE)
(72) Erfinder: SCHMID, Frank, 73779 Deizisau (DE); EDELMANN, Karl-Heinz, 71139 Ehningen (DE)
(74) Vertreter: Pfiz, Thomas
(86) Internationale Anmeldenummer: PCT/EP2018/064893
(87) Internationale Veröffentlichungsnummer: WO 2018/224547

(56) Entgegenhaltungen:
- EP-A1- 1 864 748
- EP-A1- 2 484 471
- WO-A1-97/10915
- DE-A1-102005 031 988
- DE-A1-102009 008 308
- DE-A1-102010 036 874
- DE-A1-102014 012 481
- JP-A- H09 253 915
- JP-A- 2015 054 380
- US-A1- 2002 106 251
- US-A1- 2010 272 529
- US-A1- 2015 298 222

## Beschreibung

Die Erfindung betrifft ein Fräswerkzeug, gemäß dem Oberbegriff des Patentanspruchs 1, mit einem um eine Werkzeugachse rotierbaren, an seiner Rückseite mit einer Maschinenspindel koppelbaren Werkzeugkopf, einer Vielzahl von auf einem Schneidkreis um die Werkzeugachse herum verteilt angeordneten, jeweils mit einer vorderseitigen Planschneide und einer winklig dazu verlaufenden Umfangsschneide versehenen Schneidelementen zur Fräsbearbeitung eines Werkstücks und einem durch den Werkzeugkopf hindurch verlaufenden Kanalsystem zur Kühlmittelzuführung zu den Schneidelementen.

Dokument US 2002/106251 A1 offenbart ein Fräswerkzeug gemäß dem Oberbegriff des Patentanspruchs 1.

Bei hochleistungszerspanenden Fräsern (so genannte HPC) ist es bekannt, an der Stirnseite eines aus Stahl oder Aluminium bestehenden Grundkörpers eine Vielzahl von Schneidelementen anzubringen. Diese sind dabei entweder fest angelötet oder aber in Form von Kassetten einzeln wechselbar. Nachteil der fest angelöteten Schneiden ist, dass im Verschleißfall der komplette Grundkörper insgesamt beim Hersteller neu bestückt werden muss, während die Kassetten zwar austauschbar sind, aber einzeln auf einen gemeinsamen Schneidkreis eingestellt werden müssen. Durch diese konventionelle Konstruktion ist die Werkzeugauslegung, die Gestaltung der Spannutform und die Kühlmittelzuführung sehr stark von Maschinen und Werkzeugen abhängig und oft nicht optimal wählbar.

Ausgehend hiervon liegt der Erfindung die Aufgabe zugrunde, die im Stand der Technik bekannten Fräswerkzeuge zur Vermeidung der vorgenannten Nachteile weiter zu verbessern und einen erhöhten Gebrauchsnutzen zur Erreichung einer hohen Fertigungsqualität zu gewährleisten.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, die Schneidelemente gemeinsam auf einem funktionell optimierten Trägerkörper bereitzustellen. Dementsprechend wird erfindungsgemäß vorgeschlagen, dass ein mit den Schneidelementen bestückter Wechselring auf einen vorderseitigen Stirnflansch des Werkzeugkopfs formschlüssig aufgesetzt und dort lösbar fixiert ist. Dadurch ist der Schneidenträger bei Standzeitende wechselbar und kann vor Ort mit geringem Aufwand gewechselt werden. Ein Rückversand des kompletten Werkzeuges zum Hersteller zur Wiederaufbereitung entfällt. Insgesamt wird ein Fräswerkzeug von hoher Modularität geschaffen, das je nach Anwendungsfall insbesondere hinsichtlich Schneidstoffen, Spannutgeometrie und Kühlmittelzuführung einfach konfigurierbar ist.

Vorteilhafterweise ist der Wechselring mit Taschen zur Aufnahme jeweils eines Schneidelements versehen, so dass eine definierte Vorpositionierung sichergestellt ist.

Vorteilhafterweise sind die Schneidelemente plattenförmig ausgebildet und in Richtung der Werkzeugachse gesehen unter einem Achswinkel von -20° bis +45°, insbesondere von 10° bis 20° schräg angestellt. Damit ist die Anstellung der Schneide zur Rotationsachse deutlich höher als konventionell, wodurch das Werkzeug ruhiger läuft und die Gratbildung am Bauteil minimiert wird.

Weiterhin ist es von Vorteil, wenn der Wechselring eine Vielzahl von den Schneidelementen einzeln zugeordnete Spannuten aufweist. Dadurch kann durch die Formgebung und Gestaltung des wechselbaren Bauteils ein optimaler und prozesssicherer Spanbildungsprozess und Späneabtransport gewährleistet werden.

Gemäß einer weiteren vorteilhaften Ausgestaltung sind die Spannuten in ihrem Auslaufbereich durch eine in einer Radialebene quer zur Werkzeugachse sich erstreckende Radialfläche des Wechselrings begrenzt. Durch solche Spannuten quasi ohne üblichen Nutauslauf wird die Festigkeit und die Stabilität des Wechselrings bzw. Schneidenträgers deutlich erhöht, während der Bauraum sich erheblich reduziert. Weiter wird durch diese Formgebung des Spanraumes eine Spanlenkung zur radialen Spanabfuhr unterstützt.

Neben der eigentlichen Kühl- und Schmierfunktion ist es für die Unterstützung der Spanabfuhr auch von Vorteil, dass der Wechselring eine Vielzahl von den Schneidelementen einzeln zugeordneten, zumindest abschnittsweise gekrümmt verlaufenden Kühlmittelverteilkanälen aufweist.

Für eine einfache Kühlmittelübergabe ist es vorteilhaft, wenn die Kühlmittelverteilkanäle von einer Ringnut des Werkzeugkopfs abzweigen.

Vorteilhafterweise besitzen die Kühlmittelverteilkanäle jeweils eine entgegen dem Werkzeugvorschub nach hinten oder quer dazu weisende Mündungsöffnung, so dass das Kühlmittel zielgerichtet auf den Zerspannungsprozess gelenkt und die Spanabfuhr sowie die Standzeit des Werkzeuges verbessert werden kann.

Gemäß der Erfindung ist vorgesehen, dass der Wechselring als vorzugsweise einstückiges 3D-Druckteil ausgebildet ist. In einem solchen additiv gebildeten Bauteil kann eine komplexe Bauteilgeometrie für eine optimierte Kühlmittelzuführung, Spannutform und auch Schneidenanstellung gewährleistet werden.

Für eine einfache Wechselbarkeit ist es auch günstig, wenn der Wechselring mit Gewindebohrungen zum Einschrauben von in dem Werkzeugkopf gelagerten Halteschrauben versehen ist.

Zur Fliehkraftsicherung an der Trennstelle ist es von Vorteil, wenn der Stirnflansch eine ringförmige Axialnut aufweist, in welche ein Ringbund des Wechselrings eingreift.

Eine weitere Optimierung der Bauteilgeometrie ergibt sich dadurch, dass der Wechselring eine Zahnkranzkontur aufweist, deren radial nach außen weisende Zähne an einer Zahnflanke ein Schneidelement tragen und an der anderen Zahnflanke eine Spannut begrenzen.

Um die Spanableitung zu unterstützen und einen Spänestau zu vermeiden, ist es von Vorteil, wenn der Wechselring gegenüberliegend zu jedem Schneidelement eine im Radialschnitt gekrümmt verlaufende, einen innenliegenden konkaven Abschnitt und einen äußeren konvexen Abschnitt aufweisende Spanabfuhrfläche besitzt.

Eine weitere Verbesserung im Sinne einer erhöhten Modularität ergibt sich dadurch, dass mehrere Wechselringe mit unterschiedlicher Anzahl von Schneidelementen vorgesehen sind, welche wahlweise an dem Stirnflansch des Werkzeugkopfs fixierbar sind.

Vorteilhafterweise sind die Schneidelemente vorzugsweise als PKD-Schneidelemente direkt in den Wechselring unlösbar bzw. fest eingelötet. Dadurch kann der erforderliche Bauraum für die Schneiden wesentlich kompakter gefertigt werden, wodurch sich, im Vergleich zu lösbaren Schneiden, insgesamt erheblich mehr Schneiden über den Umfang verteilt anbringen lassen. Je mehr Schneiden auf den Fräser aufgebracht werden können, desto effektiver lässt sich Werkzeug einsetzen. Ein zweiter Aspekt, die Schneiden nicht lösbar zu gestalten, liegt darin, dass mit jeder Schnittstelle (Sitz und Schneidelement) die Lagetoleranz erhöht und somit der Planlauf verschlechtert wird.

In diesem Zusammenhang ist es von besonderem Vorteil, dass der Planlauf bzw. die axiale Lagetoleranz der Planschneiden weniger als 0,02 mm, vorzugsweise etwa 0,005 mm beträgt. Ein solche Werkzeugpräzision eines Planfräsers lässt sich in durch fest eingelötete Schneidelemente realisieren, wobei eine aufwändige Justage von einzeln einstellbaren Kassetten entfällt.

Eine weitere Verbesserung ergibt sich dadurch, dass mehr als 22 Schneidelemente, vorzugsweise mehr als 30 Schneidelemente fest in den Wechselring eingelötet sind

Im Folgenden wird die Erfindung anhand des in der Zeichnung schematisch dargestellten Ausführungsbeispiels näher erläutert. Es zeigen:
- Fig. 1: ein Fräswerkzeug umfassend einen Werkzeugkopf und einen Wechselring für die Schneidplatten in vorderseitiger perspektivischer Darstellung;
- Fig. 2: das Fräswerkzeug nach Fig. 1 in rückseitiger perspektivischer Darstellung;
- Fig. 3: den Wechselring in rückseitiger perspektivischer Darstellung;
- Fig. 4: das Fräswerkzeug im Axialschnitt durch den Bereich von Bohrungen für Halteschrauben zur Fixierung des Wechselrings;
- Fig. 5: das Fräswerkzeug im Axialschnitt durch den Bereich von Kühlmittelverteilkanälen;
- Fig. 6: eine Ausschnittsvergrößerung der Fig. 5 in einem Flanschbereich des Werkzeugkopfs;
- Fig. 7: einen abgebrochenen Radialschnitt durch den Wechselring.

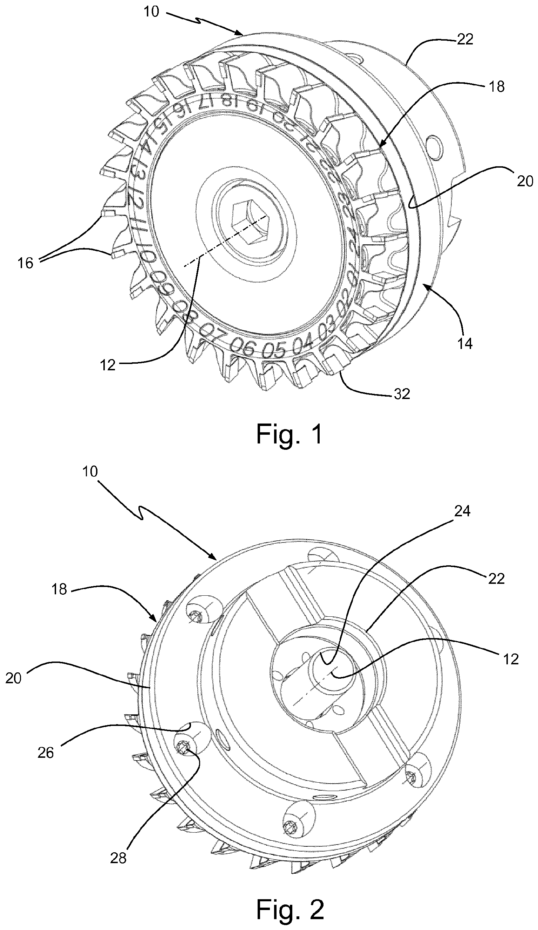

Das in Fig. 1 dargestellte Planfräswerkzeug 10 umfasst einen um seine Mittelachse als Werkzeugachse 12 rotierbaren Werkzeugkopf 14 und einen mit einer Vielzahl von Schneidelementen bzw. Schneidplatten 16 bestückten Wechselring 18, der an einem vorderseitigen Stirnflansch 20 des Werkzeugkopfs 14 formschlüssig aufgesetzt und dort lösbar fixiert ist.

Wie auch in Fig.2 erkennbar besitzt der Werkzeugkopf 14 als Aufsteckfräser 14 eine rückseitige Schnittstelle 22 zur Kopplung mit einer nicht gezeigten Fräsaufnahme; auf dieser wird er über eine Axialschraubverbindung drehfest gehalten. Alternativ kann der Wechselring 18 auch direkt auf eine Sonderaufnahme in Monoblockbauweise aufgeschraubt werden (nicht dargestellt).

An der Rückseite des ringförmigen Stirnflansches 20 sind in Umfangsrichtung verteilt Stufenbohrungen 26 zur kopfseitigen Abstützung von Halteschrauben 28 für den Wechselring 18 angeordnet.

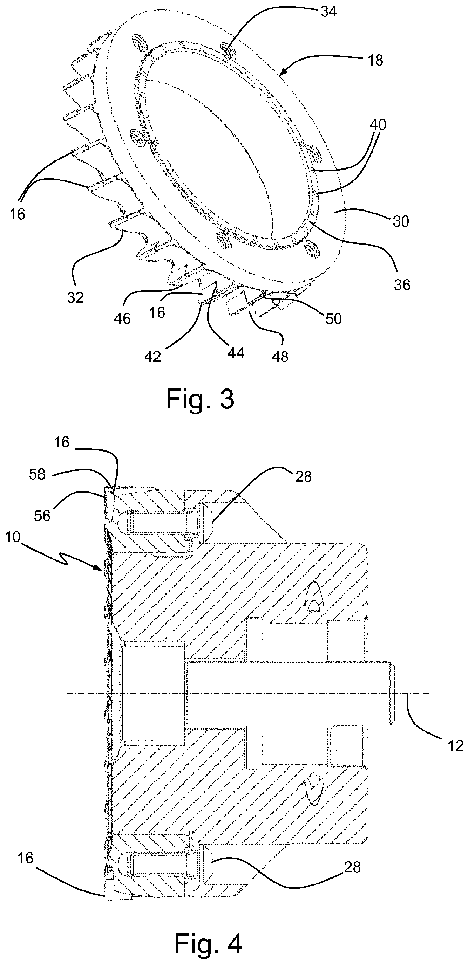

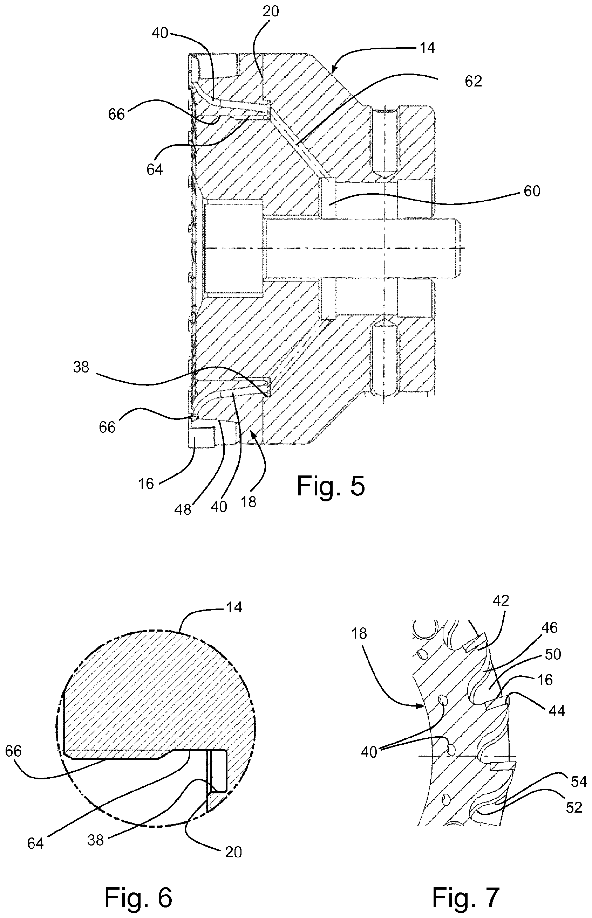

Der in Fig. 3 gesondert gezeigte Wechselring 18 umfasst eine Trägerscheibe 30, an deren Vorderseite eine Zahnkranzkontur 32 zur Halterung der Schneidplatten 16 aufgebaut ist. Rückseitig an der Trägerscheibe 30 sind axiale Gewindebohrungen 34 eingebracht, die mit den Stufenbohrungen 26 des Werkzeugkopfs 14 zum Eindrehen der Halteschrauben 28 fluchten. Ein nach hinten abstehender Ringbund 36 des Wechselrings 18 erlaubt eine gegen Fliehkräfte gesicherte formschlüssige Aufnahme in dem Stirnflansch 20. Zu diesem Zweck ist in den Stirnflansch 20 eine ringförmige Axialnut 38 eingebracht, wie es auch aus Fig. 6 ersichtlich ist. Über den Ringbund 36 verteilt sind Einlassöffnungen von Kühlmittelverteilkanälen 40, deren Verlauf zu den Schneidplatten 16 hin nachstehend näher erläutert wird.

Die Zahnkranzkontur 32 des Wechselrings 18 weist radial nach außen abstehende Zähne 42 auf, die an ihrer in Drehrichtung weisenden Zahnflanke mit Taschen 44 für die Schneidplatten 16 versehen sind, während die jeweils gegenüberliegende Zahnflanke eine komplex gekrümmte Spanabfuhrfläche 46 bildet. Auf diese Weise werden Spannuten 48 zwischen den Zähnen 42 freigehalten, die in ihrem Auslaufbereich durch eine Radialfläche 50 der Trägerscheibe 30 begrenzt sind.

Wie am besten aus Fig. 7 ersichtlich, sind die Zahnflanken angrenzend an die Plattensitze bzw. Taschen 44 eben ausgebildet. Die gegenüberliegende gekrümmte Zahnflanke weist zur Optimierung der Spanabfuhr einem innenliegenden, im Radialschnitt konkaven Abschnitt 52 und einen äußeren konvexen Abschnitt 54 auf.

Wie in Fig. 1 anhand der Nummerierung erkennbar, bilden in dem Ausführungsbeispiel vierundzwanzig Zähne die umlaufende Zahnkranzkontur 32. Durch die additive Ausbildung des Wechselrings 18 ist es problemlos möglich, eine höhere Zähne- bzw. Schneidenzahl beispielsweise von 32 bei einem Nenndurchmesser von 100 mm vorzusehen. Grundsätzlich ist es auch möglich, mehrere Wechselringe 18 mit unterschiedlicher Schneidenzahl, aber übereinstimmender Formschlusskontur für den Stirnflansch 20 nach Art eines Baukastens bereitzustellen, um dem Anwender eine zusätzliche Flexibilität zu gewähren.

Die Schneidplatten 16 sind direkt in die Taschen 44 fest eingelötet. Ein hochpräziser Planlauf von beispielsweise 0,005 mm axialer Toleranz wird durch entsprechendes Einschleifen im eingelöteten Zustand erreicht. Bevorzugt werden Schneiden aus einem polykristallinen Diamantschneidstoff (PKD) oder Schneiden aus kubisch kristallinem Bornitrid (CBN) eingesetzt.

Fig. 1 lässt auch erkennen, dass die Schneidplatten 16 unter einem Achswinkel bezüglich der Werkzeugachse 12 (bzw. einer Parallelen dazu) stark nach vorne geneigt sind. Die Neigung kann an die Schärfe der Schneide bzw. an den Schneidstoff angepasst sein, wobei ein Achswinkel von bis zu 45° für Hartmetall und CERMET denkbar ist, während für PKD-Schneiden ein Achswinkel von 10° bis 20° bevorzugt wird. Bei CBN-Schneiden für die Hartbearbeitung können auch negative Achswinkel bis zu -20° zweckmäßig sein.

Wie am besten aus Fig. 4 ersichtlich, besitzen die Schneidplatten 16 eine vorderseitige, in Richtung der Werkzeugachse 12 nach vorne weisende Planschneide 56 und eine winklig dazu verlaufende, radial nach außen weisende Umfangsschneide 58. Beim Planfräsen eines Werkstücks wird das Fräswerkzeug 10 quer zur Mittelachse 12 bewegt und in Umfangsrichtung rotiert, wobei die Schneidplatten 16 den Werkstoff spanend abtragen und die Späne mit Hilfe des nach hinten umgelenkten Kühlmittels gezielt durch die Spannuten 48 abgeführt werden, wie es nachstehend näher erläutert wird.

Die Kühlschmierstoffzuführung erfolgt über ein Kanalsystem 60 ausgehend von einem zentralen rückseitigen Anschluss an dem Werkzeugkopf, wie es in Fig. 5 dargestellt ist. Von dort zweigen Abzweigbohrungen 62 ab, die zu der ringförmigen Axialnut 38 führen. Der Einstich 64 im Bereich der Innenflanke der Axialnut 38 ermöglicht die passgenaue Bearbeitung der Mantelfläche 66 zur innenseitigen radialen Abstützung des Wechselrings 18 (s. auch Fig. 6). Die Übergabe des Kühlschmierstoffs erfolgt über den Bodenbereich der Axialnut 38 auf die einzelnen Kühlmittelverteilkanäle 40 des Wechselrings 18. Diese führen jeweils mit einem gekrümmten Verlauf und veränderlichem Querschnitt zu einer zugeordneten Schneidplatte 16, wobei die Mündungsöffnung 66 in der Spannut 48 entgegen der Werkzeugachse 12 nach hinten weist, so dass die Spanabfuhr gezielt unterstützt wird. Der Aufsteckfräser 14 mit Wechselring 18 ist auch für den Einsatz mit Minimalmengenschmierung geeignet.

Um den Wechselring in der vorstehend beschriebenen komplexen Struktur zu schaffen, kommt ein additives Fertigungsverfahren wie selektives Laserschmelzen zum Einsatz. In dem als 3D-Druckteil solchermaßen gebildeten Wechselring 18 ergeben sich somit Freiheiten in der Gestaltung der Zahnkranzkontur 32 und der inneren Kühlmittelführung, die durch abtragende Fertigungsverfahren nicht erreichbar sind.

## Patentansprüche

1. Fräswerkzeug mit einem um eine Werkzeugachse (12) rotierbaren, an seiner Rückseite mit einer Maschinenspindel koppelbaren Werkzeugkopf (14), einer Vielzahl von auf einem Schneidkreis um die Werkzeugachse (12) herum verteilt angeordneten, jeweils mit einer vorderseitigen Planschneide (56) und einer winklig dazu verlaufenden Umfangsschneide (58) versehenen Schneidelementen (16) zur Fräsbearbeitung eines Werkstücks und einem durch den Werkzeugkopf (14) hindurch verlaufenden Kanalsystem (60) zur Kühlmittelzuführung zu den Schneidelementen (16), **dadurch gekennzeichnet, dass** ein Wechselring (18) mit den Schneidelementen (16) bestückt ist und der Wechselring (18) auf einen vorderseitigen Stirnflansch (20) des Werkzeugkopfs (14) formschlüssig aufgesetzt und dort lösbar fixiert ist, wobei der Wechselring (18) eine Vielzahl von den Schneidelementen (16) einzeln zugeordneten, zumindest abschnittsweise gekrümmt verlaufenden Kühlmittelverteilkanälen (62) aufweist, und dass der Wechselring (18) als 3D-Druckteil ausgebildet ist.

2. Fräswerkzeug nach Anspruch 1, **dadurch gekennzeichnet, dass** der Wechselring (18) mit Taschen (44) zur Aufnahme jeweils eines Schneidelements (16) versehen ist.

3. Fräswerkzeug nach Anspruch 1 oder 2, **dadurch gekennzeichnet, dass** die Schneidelemente (16) plattenförmig ausgebildet sind und in Richtung der Werkzeugachse (12) gesehen unter einem Achswinkel von -20° bis +45°, insbesondere von +10° bis +20° schräg angestellt sind.

4. Fräswerkzeug nach einem der Ansprüche 1 bis 3, **dadurch gekennzeichnet, dass** der Wechselring (18) eine Vielzahl von den Schneidelementen (16) einzeln zugeordnete Spannuten (48) aufweist.

5. Fräswerkzeug nach Anspruch 4, **dadurch gekennzeichnet, dass** die Spannuten (48) in ihrem Auslaufbereich durch eine Radialfläche (50) des Wechselrings (18) begrenzt sind.

6. Fräswerkzeug nach einem der Ansprüche 1 bis 5, **dadurch gekennzeichnet, dass** der Wechselring (18) mit veränderlichem Querschnitt verlaufende Kühlmittelverteilkanäle (62) aufweist.

7. Fräswerkzeug nach Anspruch 6, **dadurch gekennzeichnet, dass** die Kühlmittelverteilkanäle (62) von einer Ringnut (64) des Werkzeugkopfs (14) abzweigen.

8. Fräswerkzeug nach Anspruch 6 oder 7, **dadurch gekennzeichnet, dass** die Kühlmittelverteilkanäle (62) jeweils eine entgegen dem Werkzeugvorschub nach hinten weisende Mündungsöffnung (66) aufweisen.

9. Fräswerkzeug nach einem der Ansprüche 1 bis 8, **dadurch gekennzeichnet, dass** der Wechselring (18) als einstückiges 3D-Druckteil ausgebildet ist.

10. Fräswerkzeug nach einem der Ansprüche 1 bis 9, **dadurch gekennzeichnet, dass** der Wechselring (18) mit Gewindebohrungen (34) zum Einschrauben von in dem Werkzeugkopf (14) gelagerten Halteschrauben (28) versehen ist.

11. Fräswerkzeug nach einem der Ansprüche 1 bis 10, **dadurch gekennzeichnet, dass** der Stirnflansch (20) eine ringförmige Axialnut (38) aufweist, in welche ein Ringbund (36) des Wechselrings (18) eingreift.

12. Fräswerkzeug nach einem der Ansprüche 1 bis 11, **dadurch gekennzeichnet, dass** der Wechselring (18) eine Zahnkranzkontur (32) aufweist, deren radial nach außen weisende Zähne (42) an einer Zahnflanke ein Schneidelement (16) tragen und an der anderen Zahnflanke eine Spannut (48) begrenzen.

## Claims

1. Milling tool comprising a tool head (14) which is rotatable about a tool axis (12) and can be coupled at its rear to a machine spindle, a plurality of cutting elements (16) for milling a workpiece, which cutting elements are arranged so as to be distributed around the tool axis (12) on a cutting circle and are each provided with a front plane cutting edge (56) and a peripheral cutting edge (58) extending at an angle thereto, and a channel system (60) extending through the tool head (14) for delivering coolant to the cutting elements (16), **characterized in that** a replaceable ring (18) is equipped with the cutting elements (16), and the replaceable ring (18) is placed on a front end flange (20) of the tool head (14) in an interlocking manner and releasably fastened there, wherein the replaceable ring (18) comprises a plurality of coolant distribution channels (62) which are associated individually with the cutting elements (16) and extend so as to be curved at least in portions, and that the replaceable ring (18) is in the form of a 3D-printed part.

2. Milling tool according to claim 1, **characterized in that** the replaceable ring (18) is provided with recesses (44) for receiving one cutting element (16) in each case.

3. Milling tool according to either claim 1 or claim 2, **characterized in that** the cutting elements (16) are formed in the manner of an insert and are adjusted so as to be inclined at an axial angle of from -20° to +45°, in particular from +10° to +20°, seen in the direction of the tool axis (12).

4. Milling tool according to any of claims 1 to 3, **characterized in that** the replaceable ring (18) comprises a plurality of flutes (48) associated individually with the cutting elements (16).

5. Milling tool according to claim 4, **characterized in that** the flutes (48) are delimited in the run-out region thereof by a radial surface (50) of the replaceable ring (18).

6. Milling tool according to any of claims 1 to 5, **characterized in that** the replaceable ring (18) comprises coolant distribution channels (62) which extend so as to have a variable cross section.

7. Milling tool according to claim 6, **characterized in that** the coolant distribution channels (62) branch off from an annular groove (64) of the tool head (14).

8. Milling tool according to either claim 6 or claim 7, **characterized in that** the coolant distribution channels (62) each comprise an outlet opening (66) which faces rearward against the tool feed motion.

9. Milling tool according to any of claims 1 to 8, **characterized in that** the replaceable ring (18) is in the form of a one-piece 3D-printed part.

10. Milling tool according to any of claims 1 to 9, **characterized in that** the replaceable ring (18) is provided with threaded bores (34) for screwing in retaining screws (28) mounted in the tool head (14).

11. Milling tool according to any of claims 1 to 10, **characterized in that** the end flange (20) comprises an annular axial groove (38) in which an annular collar (36) of the replaceable ring (18) engages.

12. Milling tool according to any of claims 1 to 11, **characterized in that** the replaceable ring (18) has a toothed rim contour (32), the radially outwardly facing teeth (42) of which support a cutting element (16) on one tooth flank and delimit a flute (48) on the other tooth flank.

## Revendications

1. Outil de fraisage comportant une tête d'outil (14) pouvant tourner autour d'un axe d'outil (12) et pouvant être accouplée à une broche de machine sur son côté arrière, une pluralité d'éléments de coupe (16), disposés de manière répartie sur un cercle de coupe autour de l'axe d'outil (12) et respectivement pourvus d'un taillant plan (56) côté avant et d'un taillant périphérique (58) s'étendant angulairement par rapport à celui-ci, pour l'usinage par fraisage d'une pièce et un système de canaux (60) s'étendant à travers la tête d'outil (14) pour l'alimentation en réfrigérant des éléments de coupe (16), **caractérisé en ce qu'**un anneau interchangeable (18) est équipé des éléments de coupe (16) et l'anneau interchangeable (18) est placé par complémentarité de forme sur une bride frontale (20) côté avant de la tête d'outil (14) et y est fixé de manière amovible, dans lequel l'anneau interchangeable (18) présente une pluralité de canaux de répartition de réfrigérant (62) associés individuellement aux éléments de coupe (16) et s'étendant de manière incurvée au moins dans certaines sections, et **en ce que** l'anneau interchangeable (18) est réalisé en tant que partie d'impression 3D.

2. Outil de fraisage selon la revendication 1, **caractérisé en ce que** l'anneau interchangeable (18) est pourvu de poches (44) permettant la réception de respectivement un élément de coupe (16).

3. Outil de fraisage selon la revendication 1 ou 2, **caractérisé en ce que** les éléments de coupe (16) sont réalisés en forme de plaque et sont mis en place de manière inclinée, vus dans la direction de l'axe d'outil (12), selon un angle d'axe de -20° à +45°, en particulier de +10° à +20°.

4. Outil de fraisage selon l'une des revendications 1 à 3,
**caractérisé en ce que** l'anneau interchangeable (18) présente une pluralité de rainures à copeaux (48) associées individuellement aux éléments de coupe (16).

5. Outil de fraisage selon la revendication 4, **caractérisé en ce que** les rainures à copeaux (48) sont limitées dans leur zone de sortie par une surface radiale (50) de l'anneau interchangeable (18).

6. Outil de fraisage selon l'une des revendications 1 à 5,
**caractérisé en ce que** l'anneau interchangeable (18) présente des canaux de répartition de réfrigérant (62) s'étendant avec une section transversale variable.

7. Outil de fraisage selon la revendication 6, **caractérisé en ce que** les canaux de répartition de réfrigérant (62) partent d'une rainure annulaire (64) de la tête d'outil (14).

8. Outil de fraisage selon la revendication 6 ou 7, **caractérisé en ce que** les canaux de répartition de réfrigérant (62) présentent respectivement une ouverture d'embouchure (66) dirigée vers l'arrière à l'encontre de l'avance d'outil.

9. Outil de fraisage selon l'une des revendications 1 à 8,
**caractérisé en ce que** l'anneau interchangeable (18) est réalisé en tant que partie d'impression 3D d'une seule pièce.

10. Outil de fraisage selon l'une des revendications 1 à 9, **caractérisé en ce que** l'anneau interchangeable (18) est pourvu de trous taraudés (34) permettant le vissage de vis de retenue (28) montées dans la tête d'outil (14).

11. Outil de fraisage selon l'une des revendications 1 à 10,
**caractérisé en ce que** la bride frontale (20) présente une rainure axiale (38) annulaire dans laquelle une collerette annulaire (36) de l'anneau interchangeable (18) vient en prise.

12. Outil de fraisage selon l'une des revendications 1 à 11,
**caractérisé en ce que** l'anneau interchangeable (18) présente un contour de couronne dentée (32) dont les dents (42) dirigées radialement vers l'extérieur portent un élément de coupe (16) sur un flanc de dent et limitent une rainure à copeaux (48) sur l'autre flanc de dent.
